(19) **Europäisches Patentamt / European Patent Office / Office européen des brevets**

(11) **EP 4 560 759 A1**

(12) # EUROPEAN PATENT APPLICATION

(43) Date of publication:
28.05.2025 Bulletin 2025/22

(21) Application number: 24212957.5

(22) Date of filing: 14.11.2024

(51) International Patent Classification (IPC):
*H01M 10/0525* (2010.01)  *H01M 50/403* (2021.01)
*H01M 50/443* (2021.01)  *H01M 50/446* (2021.01)
*H01M 50/449* (2021.01)

(52) Cooperative Patent Classification (CPC):
H01M 50/403; H01M 10/0525; H01M 50/443;
H01M 50/446; H01M 50/449

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.11.2023 KR 20230163034
11.11.2024 KR 20240159077

(71) Applicants:
• SK Innovation Co., Ltd.
Seoul 03188 (KR)
• SK IE Technology Co., Ltd.
Seoul 03188 (KR)

(72) Inventors:
• KIM, Dong Jae
Daejeon 34124 (KR)
• KIM, Yun Bong
Daejeon 34124 (KR)
• OH, Eun Ji
Daejeon 34124 (KR)
• JUNG, Hee Joon
Daejeon 34124 (KR)

(74) Representative: **Prüfer & Partner mbB
Patentanwälte · Rechtsanwälte
Sohnckestraße 12
81479 München (DE)**

(54) **SEPARATOR AND LITHIUM SECONDARY BATTERY INCLUDING THE SAME, AND METHOD FOR PRODUCING THE SAME**

(57) Provided are a separator including: a porous substrate; and an adhesive layer which is placed on at least one surface of the porous substrate and includes a binder and anisotropic particles, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000; and a lithium secondary battery including the same. The separator according to the present disclosure may have excellent adhesion to an electrode. Further provided is a method for producing the separator, and a method for manufacturing a secondary battery.

FIG. 2

EP 4 560 759 A1

## Description

## TECHNICAL FIELD

The following disclosure relates to a separator and a lithium secondary battery including the same, as well as to a method for producing the separator and the secondary battery.

## BACKGROUND

In recent years, in line with the high capacity and high output trends of a secondary battery, there is a growing demand for high strength, high permeability, and thermal stability of a separator, and improved characteristics of a separator for electrical safety of a secondary battery during charging and discharging. As an example, high mechanical strength is required for improving safety in a battery manufacture process and during use of the battery, and high permeability and high thermal stability are required for improving capacity and output.

In addition, when a separator for a secondary battery has insufficient adhesion to an electrode, the separator and the electrode are separated during a cell assembly process to cause distortion and deformation of an electrode assembly. That is, when adhesion between the separator and the electrode is insufficient as described above, a misalignment problem may occur between the electrode and the separator within a jelly roll during cell stacking. When a stack cell battery having misalignment as described above is operated, a short circuit between electrodes occurs due to the occurrence of local resistance by the misalignment or physical damage from continued use, which causes safety problems such as fires.

Therefore, it is an object to provide an improvement of adhesion between a separator and an electrode. Such an improvement finally contributes to enhanced battery safety.

## SUMMARY

An embodiment of the present disclosure is directed to a separator for an electrochemical device, such as a secondary battery such as a lithium secondary battery.

Another embodiment of the present disclosure is directed to a secondary battery including the inventive separator.

The secondary battery may be a lithium secondary battery including the inventive separator.

An embodiment of the present disclosure provides a separator having significantly improved adhesion with an electrode of the secondary battery.

An embodiment of the present disclosure provides a separator having significantly improved adhesion in a specific temperature range with an electrode of the secondary battery.

Another embodiment of the present disclosure provides a separator which may effectively suppress a blocking phenomenon in which an adhesive layer is transferred to an opposite surface and detached when winding the separator.

An embodiment of the present disclosure provides a separator that demonstrates significantly improved adhesion to an electrode of a secondary battery within a specified temperature range. Furthermore, the separator can be provided to effectively suppress a blocking phenomenon at temperatures below this specified range. For example, the separator according to an embodiment of the present disclosure enhances adhesion at temperatures of 150°C or higher, while effectively suppressing the occurrence of blocking between the adhesive layers of the separator at temperatures below 150°C.

Still another embodiment of the present disclosure is to provides a lithium secondary battery having significantly improved life characteristics.

The separator and the lithium secondary battery including the same of the present disclosure may be widely applied to the green technology field such as electric vehicles, battery charging stations, and additionally, solar power generations and wind power generations using batteries. In addition, the separator of the present disclosure and the lithium secondary battery including the same may be used in eco-friendly electric vehicles, hybrid vehicles, and similar vehicles, for suppressing air pollution and greenhouse gas emission to prevent climate change.

In one general aspect, a separator for an electrochemical device such as a secondary battery such as a lithium secondary battery includes: a porous substrate; and an adhesive layer which is placed on or above at least one surface of the porous substrate and includes a binder and anisotropic particles, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000.

In the present disclosure, the binder and the anisotropic particles are both components of the adhesive layer. The binder and the anisotropic particles may be distinct by being distinguished in terms of material, for instance in that the binder is an organic material such as a polymer and an option for the anisotropic particles is to choose inorganic particles, and/or for instance in that, although the binder may be an organic material such as a polymer and an option for the anisotropic particles is to choose organic particles, the respective organic material or polymer and/or the respective shapes may be different, e.g. in that a polymer material for the binder has a glass transition temperature lower (e.g. 50°C lower or more) than the polymer material for organic anisotropic particles, and/or e.g. in that the shapes are different, such as when the polymer of the organic anisotropic particles is in the form of fibers, whereas the binder, even if it is a particulate binder, is not in the form of fibers.

In an example embodiment, the anisotropic particles may have the aspect ratio of 4 to 200.

In an example embodiment, the anisotropic particles may have an average length in the long axis direction of 10 nm to 5000 nm and an average length in the short axis direction of 1 nm to 500 nm.

In an example embodiment, the first inorganic particles may include any one or more selected from the group consisting of metal hydroxides, metal oxides, metal nitrides, and metal carbides.

In an example embodiment, the organic particles may include any one or two or more copolymers selected from the group consisting of styrene-based polymers, acryl-based polymers, and cellulose-based polymers.

In an example embodiment, the adhesive layer may include 1.2 to 20 parts by weight of the anisotropic particles with respect to 100 parts by weight of the binder.

In an example embodiment, the adhesive layer may include 1.2 to 10 parts by weight of the anisotropic particles with respect to 100 parts by weight of the binder.

In an example embodiment, the binder may have the glass transition temperature in a range of 30°C to 120°C.

In an example embodiment, the binder may be a particulate binder.

In an example embodiment, the particulate binder may have an average particle diameter of 0.01 um to 5 um.

In an example embodiment, the binder may include any one or more selected from the group consisting of acryl-based polymers, fluorine-based polymers, ester-based polymers, amide-based polymers, imide-based polymers, styrene-based polymers, vinyl alcohol-based polymers, vinylpyrrolidone-based polymers, and cellulose-based polymers.

In an example embodiment, the adhesive layer may have a total thickness of 0.1 um to 10 um. In a further example embodiment, the adhesive layer may have a total thickness of 0.5 $\mu$m to 5 $\mu$m, or of 1.0 $\mu$m to 2.5 $\mu$m, or of 1.0 $\mu$m to 2.0 $\mu$m.

The term "total thickness" denotes the added-up thickness of all adhesive layers that are present on or above a porous substrate. For example, if there is an adhesive layer on or above only one surface of the porous substrate, then the "total thickness" is the thickness of this single adhesive layer. If there is an adhesive layer present on or above each side of the porous substrate, then the "total thickness" is the added-up thickness of each of said adhesive layers.

In an example embodiment, the separator may have an adhesive strength of 0.5 gf/cm or more, the adhesive strength being measured in accordance with ASTM D903, after the separator is laminated on a positive electrode so that the adhesive layer of the separator faces the positive electrode, and pressing is performed at 80°C and 10 kgf/cm$^2$ for 30 seconds with a heat press machine.

In an example embodiment, the separator may further include an inorganic particle layer formed between the porous substrate and any one adhesive layer. In other words, in this case, the adhesive layer is placed "above" (and not directly "on") at least one surface of the porous substrate. In the present specification, unless otherwise defined, the term "above" denotes that a part such as a layer, a film, a thin film, a region, or a plate is "above" the other part, which means that another part (film, layer, or further corresponding parts) may intervene therebetween. Thus, if an adhesive layer is "above" the surface of the porous substrate, then there is an intermediate layer (such as an inorganic particle layer) between the porous substrate and the adhesive layer.

In an example embodiment, the inorganic particle layer may include 0.1 to 20 parts by weight of a binder resin with respect to 100 parts by weight of second inorganic particles. In an example embodiment, the second inorganic particles may be a mixture of 1, 2, 3, or more types of inorganic particles having different average particle diameters. Such a mixture may be observed to show mono-, di-, tri- or further multi-modal particle size distribution. Such mono-, di-, tri- or multi-modal particle size distribution may preferably be observed in the mixture of inorganic particles before being added to a coating slurry, i.e. when using such two or more types of inorganic particles in terms of size.

In a preferred embodiment, the entirety of the second inorganic particles that are present in the inorganic particle layer show a mono-, di-, tri- or further multi-modal particle size distribution, preferably they show a bimodal particle size distribution.

For example, the "second" inorganic particles may be a mixture of inorganic particles having an average particle diameter of 0.05 $\mu$m to 0.5 $\mu$m, 0.10 um to 0.54 um, 0.10 um to 0.50 um, 0.20 um to 0.40 um, 0.30 um to 0.40 um, or about 0.30 $\mu$m; and of inorganic particles having an average particle diameter of more than 0.5 um and 2 um or less, 0.55 um to 1.0 um, 0.60 um to 0.90 $\mu$m, 0.60 um to 0.80 $\mu$m, 0.70 um to 0.80 um, or about 0.70 um. Preferably, the "second" inorganic particles are a mixture of first inorganic particles having an average particle diameter of 0.30 um, and of second inorganic particles having an average particle diameter of 0.70 um.

In another general aspect, the present disclosure provides a method for producing a separator, and the method for producing the separator for the manufacture of an electrochemical device, such as a secondary battery.

In order to avoid repetitions, the disclosure regarding the separator and the secondary battery likewise applies to the method for producing the separator, and to the method for producing the separator for manufacturing a secondary battery.

In an embodiment, a method for producing a separator for an electrochemical device, comprising the steps of:

(a) providing a porous substrate; and

(a-1) applying a coating solution for forming an adhesive layer including a binder and anisotropic particles on at least one surface of a porous substrate and performing drying to form an adhesive layer, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000; and

(a-2) thereby obtaining the separator; Or

(a-i) applying a slurry for forming an inorganic particle layer including second inorganic particles and a binder resin on at least one surface of a porous substrate and performing drying to form an inorganic particle layer; and

(a-ii) applying a coating solution for forming an adhesive layer including a binder and anisotropic particles on the inorganic particle layer and performing drying to form an adhesive layer, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000; and

(a-iii) thereby obtaining the separator.

In another general aspect, a lithium secondary battery includes: a positive electrode; a negative electrode; the separator as described above interposed between the positive electrode and the negative electrode; and an electrolyte.

Other features and aspects will become apparent from the following detailed description, the drawings, and the claims.

## BRIEF DESCRIPTION OF THE DRAWINGS

FIG. 1 is a drawing showing a scanning electron microscope (SEM) image of a surface of the separator manufactured according to Comparative Example 1.

FIG. 2 is a drawing showing a scanning electron microscope (SEM) image of a surface of the separator according to an example embodiment.

## DETAILED DESCRIPTION OF EMBODIMENTS

The embodiments described in the present specification may be modified in many different forms, and the technology according to an example embodiment is not limited to the embodiments set forth herein. In addition, the embodiment of an example embodiment is provided so that the present disclosure will be further fully described to a person with ordinary skill in the art.

In addition, the singular form used in the specification and claims appended thereto may be intended to include a plural form also, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising" any constituent elements will be understood to imply further inclusion of other constituent elements rather than exclusion of other constituent elements.

In the present specification, it will be understood that when an element such as a layer, film, region, or substrate is referred to as being "on" or "above" another element, it can be directly on the other element or intervening elements may also be present.

The terms such as "first" and "second" used in the present specification may be used to describe various constituent elements, but the constituent elements are not to be limited to the terms. The terms are only used to differentiate one constituent element from other constituent elements.

In the present specification, an average particle diameter refers to D50, and D50 refers to a particle diameter of a particle corresponding to 50% in terms of a volume-based integrated fraction. The average particle diameter may be derived from particle size distribution results obtained by collecting a sample of particles to be measured in accordance with the standard of ISO 13320-1 and performing analysis using S3500 available from MICROTRAC.

In the present specification, a glass transition temperature (Tg) refers to a temperature range in which glass transition occurs, and refers to a value measured using a dilatometer (DMT) or a differential scanning calorimeter (DSC) .

The term "Anisotropic Particles" in this specification refers to particles where the length in the long axis direction differs from the length in the short axis direction. For example, it signifies particles with an aspect ratio of 4 or greater, ranging from 4 to 1000. Particles that are not defined as "Anisotropic Particles" in this specification refer to those with an aspect ratio of less than 4, 3 or less, or 2 or less, distinguishing them from the aforementioned anisotropic particles. For instance, the "First Inorganic Particles" and "Organic Particles having a glass transition temperature of 150°C or higher" included in the adhesive layer are considered "anisotropic" particles. In contrast, the "Particulate Binder" included in the adhesive layer and the "Second Inorganic Particles" included in the inorganic particle layer may have aspect ratios that distinguish them from anisotropic particles, potentially being less than 4, 3, or 2.

In the present specification, an aspect ratio refers to a value obtained by dividing an average length in the long axis direction by an average length in the short axis direction. A length in the long axis direction refers to the longest length of a particle, and an average length in the short axis direction refers to the longest length in a direction perpendicular to the long axis.

In the present specification, the average length in the long axis direction and the average length in the short axis direction may be obtained from an average of values measured by optionally selecting 20 particles in each of 5 images taken by a transmission electron microscope (TEM, JEOL Ltd, JEM-2100F).

The present disclosure provides a separator including: a porous substrate; and an adhesive layer which is placed on or above at least one surface of the porous substrate. The adhesive layer includes a binder and anisotropic particles, wherein the adhesive layer includes 1.2 parts by weight or more of the anisotropic particles with respect to 100 parts by weight of the binder in the adhesive layer, and wherein the anisotropic particles have an aspect ratio of 4 to 1,000 and include one or more selected from first inorganic particles and organic particles having a glass transition temperature of 150°C or higher.

Since the adhesive layer includes the anisotropic particles having specific composition and physical properties as described above (e.g., the specifically defined glass transition temperature of 150°C or more and the aspect ratio of 4 to 1,000), a separator having significantly improved adhesion to an electrode may be provided. In addition, the separator may effectively suppress a blocking phenomenon in which the adhesive layer is transferred to an opposite surface and detached when winding the separator, by including the anisotropic particles. In addition, a lithium secondary battery according to an example embodiment may have significantly improved electrical properties and safety, by including the separator described above.

According to an example embodiment, the adhesive layer may be formed by applying a coating solution which includes a binder and anisotropic particles on at least one surface of the porous substrate and then drying the coating solution. Alternatively, in a variation of the embodiment, the adhesive layer may be formed by applying the coating solution on an inorganic particle layer which is formed on the at least one surface of the porous substrate. The inventive separator may prevent the coffee ring phenomenon observed with the prior art separators in which an applied coating solution for forming the adhesive layer evaporates and the binder is stacked on the edge of the applied area, by including anisotropic particles having an aspect ratio of 4 to 1000. The coffee ring phenomenon as such may be a cause of reduced adhesion between the separator and the electrode possibly because of a non-uniform distribution of the binder. It has been rather unexpectedly found that the addition of the anisotropic particles in the adhesion layer is effective in preventing the coffee ring phenomenon and the binder which is included in the adhesive layer is more uniformly distributed throughout the entire adhesive layer. As a result, the inventive separator exhibits significantly improved adhesion to the electrode.

In addition, since the separator according to an example embodiment includes the anisotropic particles including any one or more selected from first inorganic particles and organic particles having a glass transition temperature of 150°C or higher, the blocking phenomenon in which the adhesive layer is transferred to an opposite surface and detached when winding the separator may be effectively suppressed.

In an example embodiment, the anisotropic particles refer to particles having an anisotropic shape. More specifically, it has been found, that the anisotropic particles may have an anisotropic shape withan aspect ratio of 4 or more, 5 or more, 10 or more, 20 or more and 1000 or less, 750 or less, 500 or less, 200 or less, or a value between these numerical values. For example, the anisotropic particles may have the aspect ratio of 4 to 1000, 5 to 750, 10 to 500, 4 to 200, or 20 to 200. When the anisotropic particles have the above aspect ratio, the binder included in the adhesive layer may be uniformly distributed throughout the adhesive layer resulting in significantly improved adhesion between the separator and the electrode.

In an example embodiment, the specific shape of the anisotropic particles is not particularly limited as long as the aspect ratio in the range described above is satisfied. For example, the shape of the anisotropic particles may be selected from a rod shape, a pillar shape, a wire shape, a fiber shape, a plate shape, and similar shapes, without limitation. As further options, when the anisotropic particles are selected from the anisotropic "first inorganic particles" any such shapes may be chosen, and the anisotropic particles are selected from organic particles, a material and/or a shape different from the binder is suitable, for instance a polymer material being different by having a higher glass transition temperature, and/or a polymer in the form of fibers.

In an example embodiment, the anisotropic particles may have an average length in the long axis direction of 10 nm or more, 20 nm or more, 30 nm or more and 5000 nm or less, 2000 nm or less, 1000 nm or less, or a value between these numerical values. For example, the average length in the long axis direction of the anisotropic particles may be 10 nm to 5000 nm, 20 nm to 2000 nm, or 30 nm to 1000 nm, but is not particularly limited as long as the aspect ratio in the range described above is satisfied.

For example, the anisotropic particles may have an average length in the short axis direction of 1 nm or more, 2 nm or more and 500 nm or less, 200 nm or less, 100 nm or less, or a value between the numerical values. For example, the average length in the short axis direction of the anisotropic particles may be 1 nm to 500 nm, 1 nm to 200 nm, or 2 nm to 100 nm, but is not particularly limited as long as the aspect ratio in the range described above is satisfied.

In an example embodiment, the anisotropic particles may include any one or more selected from first inorganic particles and organic particles having a glass transition temperature of 150°C or higher.

The first inorganic particles which may be used as the anisotropic particles may have an average length in the long axis direction of 10 nm to 5000 nm, 10 nm to 2000 nm, 10 nm to 1000 nm, 20 nm to 500 nm, or 20 nm to 200 nm, and an average length in the short axis direction of 1 nm to 500 nm, 1 nm to 200 nm, 1 nm to 100 nm, 1 nm to 50 nm, or 2 nm to 20 nm, but is not limited as long as it does not depart from the range of the present disclosure.

The organic particles having a glass transition temperature of 150°C or higher which may be used as the anisotropic particles may have an average length in the long axis direction of 10 nm to 5000 nm, 10 nm to 2000 nm, 10 nm to 1000 nm, 20 nm to 1000 nm, or 100 nm to 1000 nm, and an average length in the short axis direction of 1 nm to 500 nm, 1 nm to 200 nm, 1 nm to 100 nm, 1 nm to 50 nm, or 1 nm to 20 nm, but is not limited as long as it does not go beyond the scope of the present disclosure.

In an example embodiment, the first inorganic particles are not limited as long as they are inorganic particles used in the art. As a non-limiting example, the first inorganic particles may include any one or more selected from the group consisting of metal hydroxides, metal oxides, metal nitrides, and metal carbides. For example, the inorganic particles may include any one or two or more selected from the group consisting of magnesium oxide (MgO), magnesium hydroxide $(Mg(OH)_2)$, alumina $(Al_2O_3)$, boehmite $(\gamma\text{-}AlO(OH))$, aluminum hydroxide $(Al(OH)_3)$, silica $(SiO_2)$, silicon carbide (SiC), calcium oxide (CaO), titanium dioxide $(TiO_2)$, strontium titanate $(SrTiO_3)$, barium titanate $(BaTiO_3)$, zinc oxide (ZnO), yttrium oxide $(Y_2O_3)$, zirconium oxide $(ZrO_2)$, tin oxide $(SnO_2)$, and cerium oxide $(CeO_2)$. In terms of adhesion to an electrode, anti-blocking, and similar properties, the first inorganic particles may be any one or two or more metal hydroxide particles selected from the group consisting of boehmite, aluminum hydroxide $(Al(OH)_3)$, and magnesium hydroxide $(Mg(OH)_2)$, but may be replaced with inorganic particles of other materials as long as they do not go beyond the scope of the present disclosure.

In an example embodiment, the organic particles are polymer particles used in the art and may have a glass transition temperature of 150°C or higher.

In an example embodiment, the organic particles optionally used for the anisotropic particles may include any one or two or more copolymers selected from the group consisting of styrene-based polymers, acryl-based polymers, and cellulose-based polymers, but may be replaced with organic particles of other materials as long as they do not go beyond the scope of the present disclosure. For example, the styrene-based polymer may be any one or more selected from polystyrene, poly $\alpha$-methylstyrene, polybromostyrene, and optionally similar or related styrene-based polymers. The acryl-based polymer may be any one or more selected from polyacrylamide, polymethacrylate, polyethylacrylate, polyacrylate, polybutylacrylate, acrylic acid-methacrylic acid copolymer, and optionally similar or related acryl-based polymers. In addition, the cellulose-based polymer may be any one or more selected from cellulose, carboxylmethyl cellulose, cellulose acetate propionate, cellulose acetate, cellulose acetate butyrate, and optionally similar or related cellulose-based polymers.

In an example embodiment, the adhesive layer may include 1.2 parts by weight or more of the anisotropic particles with respect to 100 parts by weight of the binder. When the anisotropic particles and the binder satisfying the composition ratio are included, an effect of suppressing a blocking phenomenon as well as adhesion to an electrode may be implemented excellently. Specifically, the adhesive layer may include 1.2 parts by weight to 20 parts by weight or 1.5 parts by weight to 20 parts by weight of the anisotropic particles with respect to 100 parts by weight of the binder.

In an example embodiment, the adhesive layer may include 1.2 to 10 parts by weight, 1.5 to 10 parts by weight, or 1.5 to 8 parts by weight of the anisotropic particles with respect to 100 parts by weight of the binder, and when the range is satisfied, adhesion between the separator and the electrode may be significantly improved.

In an example embodiment, the binder included in the adhesive layer imparts adhesive strength between the adhesive layer and the electrode and may have a glass transition temperature in a range of 30°C to 120°C. The binder may have the glass transition temperature in a range of 50°C to 120°C or 60°C to 110°C.

In an example embodiment, the binder included in the adhesive layer may have one or more glass transition temperatures in the range described above, for example, two or more glass transition temperatures.

In an example embodiment, the binder may be a particulate binder, and the specific shape of the particles is not particularly limited. For example, the particulate binder may have a spherical, oval, plate, or irregular particle shape.

In an example embodiment, the particulate binder may have an average particle diameter of 0.01 um or more, 0.05 um or more, 0.1 um or more and 5 um or less, 1 um or less, 0.7 um or less, 0.5 um or less, or a value between the numerical values. For example, the particulate binder may have the average particle diameter of 0.01 um to 5 um, 0.01 um to 1 um, 0.05 um to 0.7 um, or 0.1 um to 0.5 um.

In an example embodiment, the binder may include any one or more selected from the group consisting of acryl-based polymers, fluorine-based polymers, ester-based polymers, amide-based polymers, imide-based polymers, styrene-based polymers, vinyl alcohol-based polymers, vinylpyrrolidone-based polymers, and cellulose-based polymers. For example, the binder may include acryl-based polymer, styrene-based polymer, fluorine-based polymers, or copolymers of two or more thereof. As a non-limiting example, the binder may be any one or a copolymer of two or more selected from the group consisting of acrylonitrile-based polymers, styrene-based polymer, and (meth)acrylamide-based polymers.

In an example embodiment of the binder, the acryl-based polymer may be any one or more selected from polyacrylonitrile, poly(meth)acrylamide, polymethacrylate, polyethylacrylate, polyacrylate, polybutylacrylate, acrylic acid-methacrylic acid copolymer, and optionally similar or related polymer binders. The fluorine-based polymer may be any one or more selected from polyvinylidene fluoride, polytetrafluoroethylene, polyhexafluoropropylene, hexafluoropropylene, polyfluoride-hexafluoropropylene, polychlorotrifluoroethylene, and optionally similar or related fluorine-based polymers. The ester-based polymer may be any one or more selected from polyethylene terephthalate, polyethylene naphthalate (PEN), and optionally similar or related ester-based polymers. The amide-based polymer may be any one or more selected from polyamide-6, polyamide-66, and optionally similar or related amide-based polymers. The imide-based polymer may be any one or more selected from polyimide, polyetherimide, polyesterimide, and optionally similar or related imide-based polymers. The styrene-based polymer may be any one or more selected from polystyrene, poly $\alpha$-methylstyrene, polybromostyrene, and optionally similar or related styrene-based polymers. The vinyl alcohol-based polymer may be any one or more selected from polyvinyl alcohol, polyvinyl acetate, a polyvinyl acetate-polyvinyl alcohol copolymer, and optionally similar or related vinyl alcohol-based polymers. The vinylpyrrolidone-based polymer may be any one or more selected from copolymers including polyvinylpyrrolidone and vinylpyrrolidone and optionally similar or related copolymers. In addition, the cellulose-based polymer may be any one or more selected from carboxymethylcellulose, cellulose acetate propionate, cellulose acetate, cellulose acetate butyrate, and optionally similar or related cellulose-based polymers, and may be replaced with binders of other materials as long as it does not go beyond the scope of the present disclosure.

The adhesive layer may be placed to be an outermost layer of the separator in order to improve adhesive strength to an electrode.

In an example embodiment, the adhesive layer may be coated on one or both surfaces of the porous substrate or one or both surfaces of the inorganic particle layer described later. When the adhesive layer is coated on both surfaces of the porous substrate (or the inorganic particle layer), the thickness of the adhesive layer coated on one and the other surface may be the same as or different from each other. Though it is not particularly limited, the total thickness of the adhesive layer formed on the porous substrate (or inorganic particle layer) in an example embodiment may be 0.1 um to 10 um. For example, the thickness of the adhesive layer may be 0.1 to 5 um or 0.5 to 2.5 um. The thickness is obtained by measuring each thickness at 5 random points by a thickness meter available from Mitutoyo and dividing the sum of the thicknesses by 5 to obtain an average thickness.

The separator according to an example embodiment has significantly improved adhesion to an electrode, since the binder and the anisotropic particles satisfy the composition ratio in the range described above and the anisotropic particles satisfy the conditions described above. For example, the separator may have an adhesive strength of 0.4 gf/cm or more, as measured in accordance with ASTM D903, after the separator is laminated on a positive electrode so that the adhesive layer of the separator faces the positive electrode, and pressing is performed at 80°C and 10 kgf/cm$^2$ for 30 seconds with a heat press machine. The adhesive strength measured in accordance with ASTM D904 may be measured, specifically, by peeling at 180° using UTM equipment available from INSTRON. In addition, a positive electrode used in the measurement of the adhesive strength may be any common positive electrode used in a lithium secondary battery without limitation. As an example of the positive electrode active material, the positive electrode may be manufactured by adding 94 wt% of LiCoO$_2$, 2.5 wt% of polyvinylidene fluoride as a fusing agent, and 3.5 wt% of carbon black as a conductive agent with respect to the total weight of a positive electrode active material to N-methyl-2-pyrrolidone (NMP) as a solvent and performing stirring to manufacture a uniform positive electrode slurry, and coating the positive electrode slurry prepared above on an aluminum foil having a thickness of 30 um and performing drying and pressing to manufacture a positive electrode having a total thickness of 150 $\mu$m, but they may be replaced with other constituent elements as long as they do not go beyond the scope of the present disclosure. The thickness is obtained by measuring each thickness at 5 random points by a thickness meter available from Mitutoyo and dividing the sum of the thicknesses by 5 to obtain an average thickness.

Preferably, the separator may have an adhesive strength of 0.5 gf/cm or more, 0.55 gf/cm or more, 0.6 gf/cm or more, 0.65 gf/cm or more and 2.0 gf/cm or less, 1.5 gf/cm or less, 1.0 gf/cm or less, or a value between the numerical values, as measured by the method described above. For example, the separator may have an adhesive strength of 0.5 gf/cm to 2.0 gf/cm, 0.55 gf/cm to 2.0 gf/cm, 0.6 gf/cm to 1.5 gf/cm, or 0.65 gf/cm to 1.0 gf/cm, as measured by the method described above.

The separator according to an example embodiment may effectively suppress a blocking phenomenon in which the adhesive layer is transferred to an opposite surface and detached when winding the separator, since the binder and the anisotropic particles satisfy the composition ratio in the range described above and the anisotropic particles satisfy the conditions described above. For example, when two sheets of the separators according to an example embodiment are placed so that the adhesive layers face each other, pressing is performed at a temperature of 50°C and a pressure of 15 kgf/cm$^2$ for 1 hour, and peeling off at 180° is performed in accordance with ASTM D903, the adhesive layers are adhered to each other and the adhesive layer may be separated as it is without partial or complete peeling.

In an example embodiment, the separator may further include an inorganic particle layer formed between the porous substrate and any one adhesive layer. The separator may have significantly improved heat resistance as well as adhesion to an electrode and anti-blocking, by further including the inorganic particle layer. The adhesive layer is for improving adhesive strength to an electrode and may be placed to be an outermost layer in the separator. For example, the separator may have a structure stacked in the order of adhesive layer/ porous substrate/ adhesive layer, adhesive layer/ inorganic particle layer/ porous substrate/ inorganic particle layer/ adhesive layer, or adhesive layer/ porous substrate/ inorganic particle layer/ adhesive layer.

In an example embodiment, the inorganic particle layer may include second inorganic particles and a binder resin, and may be a porous inorganic particle layer having pores formed by connecting and fixing the second inorganic particles by the binder resin.

In an example embodiment, the inorganic particle layer may be formed on 90% or more, specifically 95% or more, and more specifically 100%, except the case in which fine defects occur, of the total area of each surface of the porous substrate, on one or both surfaces of the porous substrate. The inorganic particle layer may have pores formed between the inorganic particles by the inorganic particles adjacent to each other.

The second inorganic particle layers included in the inorganic particles are not limited as long as they are the inorganic particles used in the art. As a non-limiting example, the second inorganic particles may include any one or more selected from the group consisting of metal hydroxides, metal oxides, metal nitrides, and metal carbides. For example, the second inorganic particles may include any one or two or more selected from the group consisting of magnesium oxide (MgO), magnesium hydroxide (Mg(OH)$_2$), alumina (Al$_2$O$_3$), boehmite ($\gamma$-AlO(OH)), aluminum hydroxide (Al(OH)$_3$), silica (SiO$_2$), silicon carbide (SiC), calcium oxide (CaO), titanium dioxide (TiO$_2$), strontium titanate (SrTiO$_3$), barium titanate (BaTiO$_3$), zinc oxide (ZnO), yttrium oxide (Y$_2$O$_3$), zirconium oxide (ZrO$_2$), tin oxide (SnO$_2$), and cerium oxide (CeO$_2$). In terms of battery stability and similar or related properties, the second inorganic particles may be any one or two or more metal hydroxide particles selected from the group consisting of boehmite, aluminum hydroxide (Al(OH)$_3$), and magnesium hydroxide (Mg(OH)$_2$), but may be replaced with inorganic particles of other materials as long as they do not go beyond the scope of the present disclosure.

In an example embodiment, the shape of the second inorganic particles is not limited, and may be spherical, oval, needle-shaped, and optionally of similar shape.

In an example embodiment, the inorganic particle layer may include 0.1 to 20 parts by weight, 1 to 15 parts by weight, 1 to 10 parts by weight, or 1 to 5 parts by weight of the binder resin with respect to 100 parts by weight of the second inorganic particles, but is not necessarily limited thereto.

In an example embodiment, the adhesive layer may be formed on 60% or more of the total area of each surface, for one or both surfaces of the porous substrate or the inorganic particle layer formed on the porous substrate. Specifically, the adhesive layer may be formed on 80% or more, 90% or more, 95% or more, and more specifically 100%, except the case in which fine defects occur, of the total area of each surface of the porous substrate or the inorganic particle layer, but is not limited thereto as long as it does not particularly go beyond the scope of the present disclosure.

In an example embodiment, the second inorganic particles may have an average particle diameter (D50) of 2 um or less, 1 um or less and 0.01 um or more, 0.05 um or more and a value between the numerical values, and specifically, 0.01 um to 2 um or 0.05 um to 1 um. When the average particle diameter of the second inorganic particles satisfies the range described above, adhesion to an electrode, anti-blocking, and heat resistance may be significantly improved.

In an example embodiment, when the second inorganic particles are used in combination of two or two or more second inorganic particles having different average particle diameters (D50), they are bound to the anisotropic particles and/or the binders as described above to better implement adhesion to an electrode, anti-blocking, and heat resistance.

As an example of the two types of second inorganic particles having different average particle diameters, it may be a combination of inorganic particles having an average particle diameter of 0.05 um to 0.5 um and inorganic particles having an average particle diameter of more than 0.5 um and 2 um or less. Specifically, the second inorganic particles according to an example embodiment may be a combination of inorganic particles having an average particle diameter of 0.1 um to 0.4 um and inorganic particles having an average particle diameter of 0.6 um to 1 um.

In an example embodiment, the inorganic particle layer may be coated on one or both surfaces of the porous substrate, and when the inorganic particle layer is coated on both surfaces of the porous substrate, the thickness of the inorganic particle layer coated on one surface and that on the other surface may be the same as or different from each other. Though it is not particularly limited, in an example embodiment, the total thickness of the inorganic particle layer formed on the porous substrate may be 0.1 um or more, 0.5 um or more, 1 um or more and 15 um or less, 10 um or less, 5 um or less, or a value between the numerical values. In a specific example embodiment, the total thickness of the inorganic particle layer may be 0.1 to 15 $\mu$m, 0.5 to 10 um, or 1 to 5 um. The thickness is obtained by measuring each thickness at 5 random points by a thickness meter available from Mitutoyo and dividing the sum of the thicknesses by 5 to obtain an average thickness.

The binder resin included in the inorganic particle layer may connect and fix the second inorganic particle layers, the inorganic particle layer and the porous substrate, and/or the inorganic particle layer and an adhesive layer. The binder resin may be used without limitation as long as it is an organic binder resin used in the art. As an example, the binder resin may include any one or more polymers selected from the group consisting of ester-based polymers, amide-based polymers, imide-based polymers, acryl-based polymers, styrene-based polymers, vinyl alcohol-based polymers, vinylpyrrolidone-based polymers, cellulose-based polymers, and fluorine-based polymers.

The ester-based polymer may be any one or more selected from polyethylene terephthalate, polyethylene naphthalate (PEN), and optionally similar or related ester-based polymers. The amide-based polymer may be any one or more selected from polyamide-6, polyamide-66, and optionally similar or related amide-based polymers. The imide-based polymer may be any one or more selected form polyimide, polyether imide, polyester imide, and optionally similar or related imide-based polymers, and the acryl-based polymer may be any one or more selected from polyacrylamide, polymethacrylate, polyethylacrylate, polyacrylate, polybutylacrylate, an acrylic acid-methacrylic acid copolymer, and optionally similar or related acryl-based polymers. The styrene-based polymer may be any one or more selected from polystyrene, poly $\alpha$-methylstyrene, polybromostyrene, and optionally similar or related styrene-based polymers. The vinyl alcohol-based polymer may be any one or more selected from polyvinyl alcohol, polyvinyl acetate, a polyvinyl acetate-polyvinyl alcohol copolymer, and optionally similar or related vinyl alcohol-based polymers. The vinylpyrrolidone-based polymer may be any one or more selected from polyvinylpyrrolidone, copolymers including vinylpyrrolidone, and optionally similar or related vinylpyrrolidone-based polymer. In addition, the cellulose-based polymer may be any one or more selected from carboxylmethyl cellulose, cellulose acetate propionate, cellulose acetate, cellulose acetate butyrate, and optionally similar or related cellulose-based polymers. The fluorine-based polymer may be any one or more selected from polyvinylidene fluoride, polytetrafluoroethylene, polyhexafluoropropylene, hexafluoropropylene, polyfluoride-hexafluoropropylene, polychlorotrifluoroethylene, and optionally similar or related fluorine-based polymers.

In an example embodiment, the polymer resin may be a polyacrylamide-based resin in terms of implementing better heat resistance.

In an example embodiment, a porous polymer film, a sheet, a woven fabric, a non-woven fabric, and optionally further components manufactured from a polymer used as a separator may be variously used as the porous substrate, and also, a porous substrate having a laminated structure in which each layer is laminated in two or more layers may be included.

In an example embodiment, the porous substrate may be a polyolefin-based porous substrate such as polyethylene, polypropylene, or copolymers thereof, but is not limited thereto, and any porous substrate known as a porous substrate of a separator of a lithium secondary battery may be used.

In an example embodiment, the porous substrate may have a porosity of 20 to 60%, specifically 30 to 60%, but is not limited thereto.

In an example embodiment, the porous substrate may have a thickness of 1 to 25 $\mu$m, 3 to 20 um, or 5 to 15 um, but is not necessarily limited thereto. The thickness is obtained by measuring each thickness at 5 random points by a thickness meter available from Mitutoyo and dividing the sum of the thicknesses by 5 to obtain an average thickness.

In an example embodiment, the separator may have an average thickness of 1 to 40 $\mu$m, 5 to 30 um, or 10 to 20 $\mu$m, but is not necessarily limited thereto. The average thickness of the separator is obtained by overlapping the separator in 10 layers, measuring each thickness at 5 random points in TD by a thickness meter available from Mitutoyo, dividing the sum of the thicknesses by 5 to derive an average thickness of the 10-layer separator, and dividing the value by 10 again to derive an overall average thickness of a single separator.

Hereinafter, a method of manufacturing a separator of the present disclosure will be described.

The method of manufacturing a separator according to an example embodiment includes: applying a coating solution for forming an adhesive layer including a binder and anisotropic particles on at least one surface of a porous substrate and performing drying to form an adhesive layer, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000.

The method of manufacturing a separator according to another example embodiment includes: applying a slurry for forming an inorganic particle layer including second inorganic particles and a binder resin on at least one surface of a porous substrate and performing drying to form an inorganic particle layer; and applying a coating solution for forming an adhesive layer including a binder and anisotropic particles on the inorganic particle layer and performing drying to form an adhesive layer, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000. The manufacturing method will be described based on the separator on which the inorganic particle layer and an adhesive layer are formed, for convenience.

Since the separator, the porous substrate, the inorganic particle layer, the adhesive layer, the first inorganic particles, the second inorganic particles, the binder, the anisotropic particles, and the binder resin are as described above, detailed descriptions thereof will be omitted.

Any common method known in the art may be applied without limitation to the method of forming a slurry for forming an inorganic particle layer, and though it is not particularly limited, according to a non-limiting example, the slurry may be prepared by stirring and dispersing the second inorganic particles and the binder resin, and the agglomerated second inorganic particles may be dispersed using a ball mill.

The slurry for forming an inorganic particle layer includes the second inorganic particles, the binder resin, and a dispersing solvent, and the dispersing solvent may be water, lower alcohols such as ethanol, methanol, and propanol, solvents such as dimethylformamide, acetone, tetrahydrofuran, diethyl ether, methylene chloride, DMF, N-methyl-2-pyrrolidone, hexane, and cyclohexane, or a mixture thereof, but is not necessarily limited thereto.

In an example embodiment, the solid content of the slurry for forming an inorganic particle layer is not particularly limited, but, for example, may be 1 to 50 wt%, 5 to 40 wt%, or 10 to 35 wt%.

In an example embodiment, the slurry for forming an inorganic particle layer may include 80 to 99 wt% of the second inorganic particles and 1 to 20 wt% of the binder resin, based on the total weight of the solid content. Specifically, the second inorganic particles may be included at 85 to 99 wt%, 90 to 99 wt%, or 95 to 99 wt% in the slurry, based on the total weight of the solid content. Specifically, the binder resin may be included at 1 to 15 wt%, 1 to 10 wt%, or 1 to 5 wt% in the slurry, based on the total weight of the solid content.

Any common method known in the art may be applied without limitation to the method of applying a slurry for forming an inorganic particle layer, and according to a non-limiting example, roll coating, spin coating, dip coating, bar coating, die coating, slit coating, inkjet printing, and a combination of these methods may be applied. The applied slurry may be dried and formed into an inorganic particle layer. Drying for forming the inorganic particle layer is not particularly limited, but may be performed at 100°C or lower or 30 to 60°C.

Next, likewise, any common method known in the art may be applied without limitation to the method of preparing a coating solution for forming an adhesive layer, and though it is not particularly limited, according to a non-limiting example, the anisotropic particles and the binder may be stirred and dispersed to prepare the coating solution, and the agglomerated anisotropic particles and binder may be dispersed using a ball mill.

The coating solution for forming an adhesive layer includes the binder, the anisotropic particles, and a solvent, and the solvent may be any one of dispersing solvents which may be used in the preparation of the slurry for forming an inorganic particle layer, and specifically, may be distilled water.

In an example embodiment, the solid content of the coating solution for forming an adhesive layer is not particularly limited, but, for example, may be 1 to 20 wt%, 2 to 15 wt%, or 5 to 10 wt%.

In an example embodiment, the coating solution for forming an adhesive layer may include 80 to 98.8 wt% of the binder and 1.2 to 20 wt% of the anisotropic particles, based on the total weight of the solid content. Specifically, the binder may be included at 85 to 98.8 wt%, 90 to 98.5 wt%, or 92.5 to 98.5 wt% in the coating solution, based on the total weight of the solid content. Specifically, the binder may be included at 1.2 to 10 wt%, 1.5 to 10 wt%, or 1.5 to 7.5 wt% in the coating solution, based on the total weight of the solid content.

Any common method known in the art may be applied without limitation to the method of applying a coating solution for forming an adhesive layer, and specifically, a method of applying a slurry for forming an inorganic particle layer may be applied. The applied coating solution may be dried and formed into the adhesive layer. Drying for forming the adhesive layer is not particularly limited, but may be performed at 100°C or lower or 30 to 60°C.

An example embodiment of the present disclosure provides a lithium secondary battery including: a positive electrode, a negative electrode, the separator described above interposed between the positive electrode and the negative electrode, and an electrolyte. Herein, the positive electrode, the negative electrode, and the electrolyte may be used without limitation as long as they are commonly used in the lithium secondary battery. According to an example embodiment, a lithium secondary battery having significantly improved adhesion between the positive electrode or the negative electrode and the separator and significantly improved anti-blocking, and having improved battery life characteristics may be provided, by employing the inventive separator. Specifically, a blocking phenomenon and a coffee ring phenomenon are substantially prevented thus allowing strong adhesion between the electrode and the separator which prevents unnecessary space such as bubbles created between the electrode and the separator. Accordingly, the problem of battery life decreased by unnecessary space may be suppressed. A lithium secondary battery which employs the inventive separator may have significantly improved life characteristics.

The positive electrode and the negative electrode may be manufactured by mixing a positive electrode active material and a negative electrode active material with a solvent, and if necessary, a binder, a conductive material, a dispersing material, and optionally further components, performing stirring to prepare a mixture, applying the mixture on a current collector of a metal material, and performing drying and then pressing.

Any suitable active material commonly used in the positive electrode of a secondary battery may be used as the positive electrode active material. For example, lithium metal oxide particles including one or two or more metals selected from the group consisting of Ni, Co, Mn, Na, Mg, Ca, Ti, V, Cr, Cu, Zn, Ge, Sr, Ag, Ba, Zr, Nb, Mo, Al, Ga, B, and a combination thereof may be used.

Any suitable active material commonly used in the negative electrode of a secondary battery may be used as the negative electrode active material. The negative electrode active material of the lithium secondary battery may be a material capable of lithium intercalation. As an example, the negative electrode active material may be one or two or more materials selected from the group consisting of negative electrode active materials of lithium (metal lithium), easily graphitized carbon, hardly graphitized carbon, graphite, silicon, an Sn alloy, an Si alloy, an Sn oxide, an Si oxide, a Ti oxide, an Ni oxide, a Fe oxide (FeO), and a lithium-titanium oxide ($LiTiO_2$, $Li_4Ti_5O_{12}$).

As conductive material, any suitable conductive carbon material may be used without limitation.

The nonaqueous electrolyte solution includes a lithium salt as an electrolyte and an organic solvent, and as the lithium salt, those commonly used in the electrolyte solution for a lithium secondary battery may be used without limitation and may be represented by $Li^+X^-$.

The anion of the lithium salt is not particularly limited, and may be any one or two or more of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

As the organic solvent, any one or a mixture of two or more selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimetoxyethane, diethoxyethane, sulfolane, $\gamma$-butyrolactone, tetrahydrofuran, and optionally similar or related solvents may be used.

The nonaqueous electrolyte solution may be injected into an electrode structure formed of a positive electrode, a negative electrode, and a separator interposed between the positive electrode and the negative electrode.

The external shape of the lithium secondary battery is not particularly limited, but may be selected from a cylindrical shape using a can, a square shape, a pouch shape, a coin shape, and optionally a similar shape.

Hereinafter, the examples of the present disclosure will be further described with reference to specific experimental examples. It should be apparent to those skilled in the art that the examples and the comparative examples are included for further illustrating the embodiments of the present disclosure and should not be interpreted as limiting the scope of the embodiments as defined in the appended claims. Various modifications and alterations of the examples may be made within the range of the scope and technical concepts of the present disclosure.

First, a method of evaluating physical properties will be described.

[Average particle diameter]

The average particle diameter was derived from particle size distribution results obtained by collecting a sample of particles to be measured in accordance with the standard of ISO 13320-1 and performing analysis using S3500 available from MICROTRAC.

[Glass transition temperature (Tg)]

The glass transition temperature was measured using a differential scanning calorimeter (DSC). The manufacturer was Mettler Toledo and the model name was DSC1.

In the measurement method, 5 to 10 mg of a specimen was prepared according to a DSC pan size, and the specimen was placed in a container and pressed with a crimper press. Analysis was performed by placing the prepared sample and a reference, and selecting a temperature range, a heating rate, and a reactive gas. Tg is defined as the midpoint of the baseline shift, that is, the midpoint of the baseline where the change in heat capacity begins and ends.

The measurement conditions were as follows:

Temperature range: -100 to 250°C
Reactive gas: $N_2$
Heating/cooling rate: 10°C/min

[Aspect ratio of anisotropic particles]

The aspect ratio refers to a value obtained by dividing an average length in the long axis direction by an average length in the short axis direction. The average length in the long axis direction refers to the longest length of a particle, and the average length in the short axis direction refers to the longest length in a direction perpendicular to the long axis.

The average length in the long axis direction and the average length in the short axis direction were obtained from an average of values measured by optionally selecting 20 particles from each of 5 images measured by a transmission electron microscope (TEM, JEOL Ltd, JEM-2100F).

[Measurement of molecular weight]

Measurement of molecular weight was performed by using GPC (EcoSEC HLC-8320 GPC Reflective Index detector from Tosoh Corporation), TSKgel guard PWxl, two columns of TSKgel GMPWxl and TSKgel G2500PWxl (7.8×300 mm) were connected as a GPC column, a 0.1 M aqueous $NaNO_3$ solution was used as a solvent, PEG/PEO was used as a reference material, and analysis was performed at 40°C at a flow rate of 1 mL/min.

1) Treatment of gel permeation chromatograph (GPC) sample

(1) Sample pretreatment: using the provided sample as it was
(2) Sample dissolution state: complete dissolution
(3) Sample solution filtration: 0.45 um Nylon filter

2) Conditions of gel permeation chromatograph (GPC) analysis instrument

(1) Analysis instrument: EcoSEC HLC-8320 GPC available from Tosoh Corporation
(2) Detector: RI-detector
(3) Developing solvent: 0.1 M $NaNO_3$
(4) Column (maker, model no.): Tskgel guard PWxl + 2×TSKgel GMPWxl + TSKgel G2500PWxl (7.8×300 mm)
(5) Temperature: 40°C
(6) Flow velocity: 1.0 mL/min
(7) Injection amount: 100 ul, 100 mg/mL
(8) Reference material: PEG/PEO

[Porosity]

The porosity of the separator was obtained by cutting a sample of 10 cm×10 cm and performing calculation from the following equation:

$$\text{Porosity} = \{1-[M/(100*T*\rho)]\}\times100$$

wherein T = fabric thickness (cm),
M = sample weight (g),
$\rho$ = density of fabric resin (g/cm$^3$)

[Evaluation of adhesion to electrode]

94 wt% of $LiCoO_2$, 2.5 wt% of polyvinylidene fluoride as a fusing agent, and 3.5 wt% of carbon black as a conductive agent, based on the total weight of the positive electrode active material, were added to N-methyl-2-pyrrolidone (NMP) as a solvent, and stirring was performed to prepare a uniform positive electrode slurry. The slurry prepared above was coated on an aluminum foil having a thickness of 30 μm, dried, and pressed to manufacture a positive electrode having a total thickness of 150 um.

The separator was placed on the positive electrode manufactured above so that the adhesive layer of the separators of the examples and the comparative examples faces the positive electrode, pressing was performed with heat at 80°C and pressure of 10 kgf/cm$^3$ for 30 seconds using a heat press machine, and then peeling at 180° was performed with UTM equipment available from INSTRON in accordance with ASTM D903 to measure adhesive strength (gf/cm) between the separator and the electrode.

[Evaluation of whether coffee ring phenomenon was improved]

It was evaluated whether a coffee ring phenomenon was improved through scanning electron microscope (SEM) images of the separators of the examples and the comparative examples. When ring-shaped stain was observed in the SEM image, it was determined that the coffee ring occurred. When coffee ring occurrence was confirmed in the SEM image, it was evaluated as "NG", and when coffee ring occurrence was not confirmed, it was evaluated as "OK".

[Evaluation of anti-blocking]

Two sheets of separators including the adhesive layer were placed so that the adhesive layers face each other, pressing was performed at a temperature of 50°C with a pressure of 15 kgf/cm$^2$ for 1 hour using a heat press machine, and then when peeling at 180° was performed in accordance with ASTM D903, it was evaluated whether the adhesive layers were adhered to each other and partially or overall peeled off. When partial peeling occurred, blocking occurred, and when the adhesive layer was separated as it was without peeling, blocking did not occur. It was confirmed from the scanning electron microscope (SEM) image whether the blocking occurred. When blocking occurrence was confirmed in the SEM image, it was evaluated as "NG", and when blocking occurrence was not confirmed, it was evaluated as "OK".

[Evaluation of battery life characteristics]

First, in order to evaluate the battery life characteristics, a battery was manufactured as follows.

Manufacture of positive electrode

92 wt% of LiNi$_x$Co$_y$Mn$_z$O2 (x = 0.4-0.8, y = 0.1-0.3, z = 0.1-0.3) as a positive electrode active material, 4 wt% of carbon black as a conductive material, and 4 wt% of polyvinylidene fluoride (PVdF) as a binder were added to N-methyl-2-pyrrolidone (NMP) as a solvent, and stirring was performed to prepare a uniform positive electrode slurry. The positive electrode slurry was applied on an aluminum (Al) foil having a thickness of 30 $\mu$m, dried, and pressed to manufacture a positive electrode having a total thickness of 150 $\mu$m.

Manufacture of negative electrode

96 wt% of graphite carbon as a negative electrode active material, 3 wt% of carbon black as a conductive material, and 1 wt% of PVdF as a binder were added to NMP as a solvent, and stirring was performed to prepare a uniform negative electrode slurry. The negative electrode slurry was applied on a copper (Cu) foil having a thickness of 20 $\mu$m, dried, and pressed to manufacture a negative electrode having a total thickness of 150 $\mu$m.

Manufacture of battery

The separator of the example or the comparative example was placed between the positive electrode and the negative electrode, wound, and added to an aluminum pack. Thereafter, an electrolyte in which 1 M lithium hexafluorophosphate (LiPF$_6$) was dissolved in a solution including ethylene carbonate and diethyl carbonate at a volume ratio of 1:1 was injected, and the pack was sealed to manufacture a secondary battery having a capacity of 2 Ah.

Next, the secondary battery manufactured above was charged and discharged for 600 cycles using a charging/discharging cycle device, and a discharge capacity at each cycle was measured. Specifically, the battery was charged to 4.2 V at a constant current of 1 C at 25°C, charged to a current of 0.01 C at a constant voltage while maintaining 4.2 V, and then discharged to 2.5 V at a constant current of 1 C, which was set as 1 cycle. A cycle point at which the discharge capacity was decreased by less than 80% of the discharge capacity at the first cycle was set as a cycle life, which is shown in Table 1.

**<Example 1>**

Manufacture of inorganic particle layer

30 parts by weight of boehmite particles (Nabaltec, ACTILOX® 200SM) having an average particle diameter (D50) of 300 nm and 70 parts by weight of boehmite particles (Nabaltec, ACTILOX® B60) having an average particle diameter (D50) of 700 nm as inorganic particles, and 3 parts by weight of polyacrylamide (weight average molecular weight: 300,000 g/mol) as a binder resin were added to distilled water so that a solid content concentration was 25 wt%, and stirring was performed to prepare a slurry for forming an inorganic particle layer.

On both surfaces of a polyethylene porous film (porosity: 41%, average thickness: 9 pm), the slurry for forming an inorganic particle layer was applied by bar coating, the slurry was sufficiently dried at 40°C to form an inorganic particle layer having an average thickness of 1.5 um on each of both surfaces of the porous substrate.

Manufacture of adhesive layer

100 parts by weight of acryl-based particles having an average particle diameter (D50) of 500 nm and a glass transition temperature of 60°C as a binder and 7.1 parts by weight of cellulose nanofiber (Hansol, Duracle A) having a glass transition temperature of 200°C as anisotropic particles were dispersed in distilled water so that the solid content concentration was 7.5 wt%, and then mixing was performed to prepare a coating solution for forming an adhesive layer. The acryl-based particles used at this time were a copolymer prepared from acrylonitrile, styrene, and methacrylamide, and the cellulose nanofiber had an average length in the long axis direction of 350 nm and an average length in the short axis direction of 5 nm and a glass transition temperature of 200°C.

The coating solution for forming an adhesive layer was applied on each surface of the inorganic particle layer formed on both surfaces of the porous substrate by spray coating, and sufficiently dried to form an adhesive layer having an average thickness of 0.75 um on each of the both surfaces of the inorganic particle layer. Finally, a separator laminated in the order of adhesive layer/ inorganic particle layer/ porous substrate/ inorganic particle layer/ adhesive layer was manufactured.

**\<Example 2\>**

A separator was manufactured in the same manner as in Example 1, except that a cellulose acetate nanofiber having an average length in the long axis direction of 350 nm, an average length in the short axis direction of 5 nm, and a glass transition temperature of 150°C was used as anisotropic particles.

**\<Example 3\>**

A separator was manufactured in the same manner as in Example 1, except that a cellulose nanofiber having an average length in the long axis direction of 100 nm, an average length in the short axis direction of 5 nm, and a glass transition temperature of 200°C was used as anisotropic particles.

**\<Example 4\>**

A separator was manufactured in the same manner as in Example 1, except that a cellulose nanofiber having an average length in the long axis direction of 1000 nm, an average length in the short axis direction of 5 nm, and a glass transition temperature of 200°C was used as anisotropic particles.

**\<Example 5\>**

A separator was manufactured in the same manner as in Example 1, except that 7.1 parts by weight of boehmite particles having an average length in the long axis direction of 40 nm and an average length in the short axis direction of 8 nm were used as anisotropic particles. The boehmite particles used at this time were manufactured by the following method. First, $Al(NO_3)_3 \cdot 9H_2O$ was dispersed in water to prepare an aluminum precursor solution. Subsequently, acetic acid was added to the aluminum precursor solution to adjust the pH to 3.3, and a reaction was performed while stirring at 120°C for 24 hours.

**\<Example 6\>**

A separator was manufactured in the same manner as in Example 5, except that 1.5 parts by weight of boehmite particles were used as anisotropic particles.

**<Example 7>**

A separator was manufactured in the same manner as in Example 5, except that 15 parts by weight of boehmite particles were used as anisotropic particles.

**<Example 8>**

A separator was manufactured in the same manner as in Example 5, except that 20 parts by weight of boehmite particles were used as anisotropic particles.

**<Example 9>**

A separator was manufactured in the same manner as in Example 1, except that no inorganic particle layer was formed on both surfaces of the polyethylene porous film. Specifically, the coating solution for forming the adhesive layer was applied to both surfaces of the porous substrate by spray coating, and then sufficiently dried at 40°C to form an adhesive layer having an average thickness of 0.75 um on each surface of the inorganic particle layer. Finally, a separator laminated in the order of adhesive layer/porous substrate/adhesive layer was manufactured.

**<Comparative Example 1>**

A separator was manufactured in the same manner as in Example 1, except that anisotropic particles were not added during manufacture of a coating solution for forming an adhesive layer.

**<Comparative Example 2>**

A separator was manufactured in the same manner as in Example 1, except that acryl-based particles having an average length in the long axis direction of 450 nm, an average length in the short axis direction of 10 nm, and a glass transition temperature of 140°C were used as anisotropic particles.

**<Comparative Example 3>**

A separator was manufactured in the same manner as in Example 1, except that a cellulose acetate nanofiber having an average length in the long axis direction of 350 nm, an average length in the short axis direction of 10 nm, and a glass transition temperature of 140°C was used as anisotropic particles.

**<Comparative Example 4>**

A separator was manufactured in the same manner as in Example 1, except that 100 parts by weight of boehmite particles having an average length in the long axis direction of 800 nm and an average length in the short axis direction of 300 nm were used as anisotropic particles.

**<Comparative Example 5>**

A separator was manufactured in the same manner as in Example 5, except that 1 part by weight of boehmite particles were used as anisotropic particles.

[Table 1]

| | Adhesion to electrode (gf/cm) | whether coffee ring phenomenon was improved | Anti- blocking | Battery life characteristics (cycle) |
|---|---|---|---|---|
| Example 1 | 0.65 | OK | OK | 520 |
| Example 2 | 0.63 | OK | OK | 510 |
| Example 3 | 0.63 | OK | OK | 515 |
| Example 4 | 0.63 | OK | OK | 530 |
| Example 5 | 0.73 | OK | OK | 515 |

(continued)

| | Adhesion to electrode (gf/cm) | whether coffee ring phenomenon was improved | Anti- blocking | Battery life characteristics (cycle) |
|---|---|---|---|---|
| Example 6 | 0.7 | OK | OK | 525 |
| Example 7 | 0.48 | OK | OK | 401 |
| Example 8 | 0.4 | OK | OK | 415 |
| Example 9 | 0.75 | OK | OK | 505 |
| Comparative Example 1 | 0.67 | NG | NG | 250 |
| Comparative Example 2 | 0.63 | OK | NG | 310 |
| Comparative Example 3 | 0.6 | OK | NG | 280 |
| Comparative Example 4 | 0.3 | NG | NG | 220 |
| Comparative Example 5 | 0.65 | NG | NG | 210 |

Referring to Table 1, in the separators of Examples 1 to 9, the coffee ring phenomenon in which the applied coating solution for forming an adhesive layer evaporates and the binder is stacked on the edge of the applied area was improved and the blocking phenomenon in which the adhesive layer is transferred to an opposite surface and detached when winding the separator was also improved, as compared with the separators of the comparative examples.

However, the separator of Comparative Example 1 which did not include the anisotropic particles according to an example embodiment had the coffee ring phenomenon and the blocking phenomenon. In addition, the separators of Comparative Examples 2 and 3 including organic particles having a glass transition temperature of lower than 150°C as the anisotropic particles had the blocking phenomenon, and the separator of Comparative Example 4 including anisotropic particles having an aspect ratio of less than 4 had the coffee ring phenomenon and the blocking phenomenon. In addition, the separator of Comparative Example 5 including less than 1.2 parts by weight of anisotropic particles with respect to 100 parts by weight of the binder was confirmed to have the coffee ring phenomenon and the blocking phenomenon.

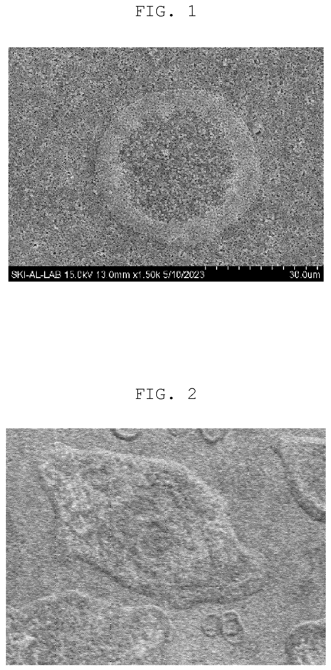

Specifically, FIG. 1 is a drawing showing an SEM image of the surface of the separator manufactured in Comparative Example 1. FIG. 2 is a drawing showing an SEM image of the surface of the separator manufactured in Example 5. Referring to the drawings, the separator of Comparative Example 1 which did not include the anisotropic particles on the adhesive layer, had a coffee ring-shaped stain which was clearly observed on the surface, but the separator of Example 5 which included the anisotropic particles on the adhesive layer had an improved coffee ring phenomenon on the surface. In addition, the separators of Comparative Examples 2 to 5 had clearly observed coffee ring-shaped stains like that observed in FIG. 1. The separators manufactured in the examples other than Example 5 had an improved coffee ring phenomenon on the surface of the separator.

The separator of the embodiments of the present disclosure may use anisotropic particles which are included at 1.2 parts by weight with respect to 100 parts by weight of the binder, may include one or more of the first inorganic particles and organic particles having a glass transition temperature of 150°C or higher, and have an aspect ratio of 4 to 1,000. The separator may have an improved (i.e., reduced) coffee ring phenomenon, significantly improved adhesion to an electrode and significantly improved anti-blocking. The separator may be substantially free of the coffee ring phenomenon of the prior art.

The separator according to the embodiments of the present disclosure may have significantly improved adhesion to an electrode of a secondary battery.

In addition, the embodiments of the present disclosure may provide a separator having an improved blocking phenomenon occurring when winding a separator.

In addition, the embodiments of the present disclosure may provide a lithium secondary battery having significantly improved life characteristics, by including the inventive separator.

The above description is only an example to which the principle of the present disclosure is applied, and other embodiments may be further included without departing from the scope of the present disclosure. Furthermore, the embodiments may be combined to form additional embodiments.

**Claims**

1. A separator for an electrochemical device, comprising:

a porous substrate; and

an adhesive layer which is placed on or above at least one surface of the porous substrate,

wherein the adhesive layer includes a binder and anisotropic particles,

wherein the adhesive layer includes 1.2 parts by weight or more of the anisotropic particles with respect to 100 parts by weight of the binder in the adhesive layer, and

wherein the anisotropic particles have an aspect ratio of 4 to 1,000 and include one or more selected from first inorganic particles and organic particles having a glass transition temperature of 150°C or higher.

2. The separator of claim 1, wherein the anisotropic particles have the aspect ratio of 4 to 200, and/or wherein the binder that is included in the adhesive layer has a glass transition temperature in a range of 30°C to 120°C.

3. The separator of claim 1 or claim 2, wherein the anisotropic particles have an average length in a long axis direction of 10 nm to 5000 nm and an average length in a short axis direction of 1 nm to 500 nm.

4. The separator of any one of claims 1 to 3, wherein the first inorganic particles include any one or more selected from the group consisting of metal hydroxides, metal oxides, metal nitrides, and metal carbides.

5. The separator of any one claims 1 to 4, wherein the organic particles include any one or two or more copolymers selected from the group consisting of styrene-based polymers, acryl-based polymers, and cellulose-based polymers.

6. The separator of any one of claims 1 to 5, wherein the adhesive layer includes 1.2 to 20 parts by weight of the anisotropic particles with respect to 100 parts by weight of the binder in the adhesive layer, preferably the adhesive layer includes 1.2 to 10 parts by weight of the anisotropic particles with respect to 100 parts by weight of the binder in the adhesive layer.

7. The separator of any one of claims 1 to 6, wherein the binder has a glass transition temperature in a range of 30°C to 120°C.

8. The separator of any one of claims 1 to 7, wherein the binder is a particulate binder, preferably wherein the particulate binder has an average particle diameter of 0.01 um to 5 $\mu$m.

9. The separator of any one of claims 1 to 8, wherein the binder includes any one or more selected from the group consisting of acryl-based polymers, fluorine-based polymers, ester-based polymers, amide-based polymers, imide-based polymers, styrene-based polymers, vinyl alcohol-based polymers, vinylpyrrolidone-based polymers, and cellulose-based polymers.

10. The separator of any one of claims 1 to 9, wherein the adhesive layer has a total thickness of 0.1 um to 10 $\mu$m.

11. The separator of any one of claims 1 to 10, wherein the separator has an adhesive strength of 0.5 gf/cm or more, the adhesive strength being measured in accordance with ASTM D903, after the separator is laminated on a positive electrode so that the adhesive layer of the separator faces the positive electrode, and pressing is performed at 80°C and 10 kgf/cm$^2$ for 30 seconds with a heat press machine.

12. The separator of any one of claims 1 to 11, further comprising an inorganic particle layer formed between the porous substrate and any one adhesive layer, preferably wherein the inorganic particle layer includes 0.1 to 20 parts by weight of a binder resin with respect to 100 parts by weight of second inorganic particles.

13. A method for producing a separator for an electrochemical device, comprising the steps of:

(a) providing a porous substrate; and

(a-1) applying a coating solution for forming an adhesive layer including a binder and anisotropic particles on at least one surface of a porous substrate and performing drying to form an adhesive layer, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000; and

(a-2) thereby obtaining the separator;

Or

(a-i) applying a slurry for forming an inorganic particle layer including second inorganic particles and a binder resin on at least one surface of a porous substrate and performing drying to form an inorganic particle layer; and

(a-ii) applying a coating solution for forming an adhesive layer including a binder and anisotropic particles on the inorganic particle layer and performing drying to form an adhesive layer, wherein the adhesive layer includes 1.2 parts by weight or more of the anisotropic particles with respect to 100 parts by weight of the binder, and the anisotropic particles include any one or more selected from first inorganic particles and organic particles having a glass transition temperature of 150°C or higher and have an aspect ratio of 4 to 1,000; and

(a-iii) thereby obtaining the separator.

**14.** The method for producing a separator according to claim 13 for manufacturing a secondary battery.

**15.** A lithium secondary battery comprising: a positive electrode; a negative electrode; the separator of any one of claims 1 to 15 interposed between the positive electrode and the negative electrode; and an electrolyte.

FIG. 1

FIG. 2

| | Europäisches Patentamt European Patent Office Office européen des brevets | **EUROPEAN SEARCH REPORT** | **Application Number** EP 24 21 2957 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/067048 A1 (KIM YUN BONG [KR] ET AL) 27 February 2020 (2020-02-27) | 1-4,6, 9-11, 13-15 | INV. H01M10/0525 H01M50/403 |
| A | * claims 1,6,8,11,14; examples * ----- | 5,7,8,12 | H01M50/443 H01M50/446 |
| X | JP 2011 023186 A (HITACHI MAXELL) 3 February 2011 (2011-02-03) | 1,2,4,6, 9,11, 13-15 | H01M50/449 |
| A | * paragraphs [0010] - [0103] * ----- | 3,5,7,8, 10,12 | |
| X | US 2007/264577 A1 (KATAYAMA HIDEAKI [JP] ET AL) 15 November 2007 (2007-11-15) | 1,2,4,6, 9,11, 13-15 | |
| A | * examples 8,9 * ----- | 3,5,7,8, 10,12 | |
| X | CN 107 799 702 B (BYD CO LTD) 26 March 2021 (2021-03-26) | 1,2,5,6, 9-11, 13-15 | |
| | | | TECHNICAL FIELDS SEARCHED (IPC) |
| A | * claims 1-3; examples * ----- | 3,4,7,8, 12 | H01M |

The present search report has been drawn up for all claims

| Place of search | Date of completion of the search | Examiner |
|---|---|---|
| Munich | 14 April 2025 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2957

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| US 2020067048 A1 | 27-02-2020 | CN 110854346 A | 28-02-2020 |
| | | EP 3614456 A1 | 26-02-2020 |
| | | KR 20200021664 A | 02-03-2020 |
| | | US 2020067048 A1 | 27-02-2020 |
| JP 2011023186 A | 03-02-2011 | JP 5670626 B2 | 18-02-2015 |
| | | JP 2011023186 A | 03-02-2011 |
| US 2007264577 A1 | 15-11-2007 | CA 2586062 A1 | 15-06-2006 |
| | | US 2007264577 A1 | 15-11-2007 |
| | | WO 2006062153 A1 | 15-06-2006 |
| CN 107799702 B | 26-03-2021 | NONE | |

EPO FORM P0459

For more details about this annex : see Official Journal of the European Patent Office, No. 12/82